# FASCICULE DE BREVET EUROPEEN

(11) **EP 3 627 795 B1**
(45) Date de publication et mention de la délivrance du brevet: **26.07.2023**
(21) Numéro de dépôt: 19197079.7
(22) Date de dépôt: 12.09.2019
(51) Int. Cl.: H04L 9/40

(54) **PROCÉDÉ DE DÉTECTION ET FILTRAGE DE FLUX ILLÉGITIMES DANS UN RÉSEAU DE COMMUNICATION PAR SATELLITE**
DETEKTIONS- UND FILTERVERFAHREN VON ILLEGALEN DATENSTRÖMEN IN EINEM KOMMUNIKATIONSSYSTEM ÜBER SATELLIT
METHOD FOR DETECTING AND FILTERING ILLEGAL STREAMS IN A SATELLITE COMMUNICATION NETWORK

(30) Priorité: 20.09.2018 FR 1800987
(43) Date de publication de la demande: 25.03.2020
(73) Titulaire: Thales, 92400 Courbevoie (FR)
(72) Inventeur: ROGNANT, Pierre, 31100 TOULOUSE (FR); VAN WAMBEKE, Nicolas, 31100 TOULOUSE (FR); PEYREGA, Mathilde, 31100 TOULOUSE (FR)
(74) Mandataire: Atout PI Laplace

(56) Documents cités:
- US-A1- 2008 133 518
- US-A1- 2008 146 219
- US-B1- 9 042 911

## Description

L'invention concerne le domaine des réseaux de communication par satellite et plus précisément celui de la protection de tels réseaux contre des attaques d'utilisateurs malveillants qui génèrent et transmettent des flux de communications illégitimes dans le but de perturber le fonctionnement du réseau. L'invention concerne en particulier les réseaux de communication satellitaires entre des terminaux et un réseau d'accès par exemple le réseau d'accès à Internet.

L'invention a pour objet un procédé de détection et filtrage de flux illégitimes dans un réseau de communication par satellite ainsi qu'une station satellitaire implémentant ce procédé.

Le contexte de l'invention est celui des réseaux de communication permettant à des terminaux utilisateurs d'accéder à un réseau d'accès via une liaison satellite. Le réseau d'accès est par exemple le réseau Internet. Les terminaux utilisateurs sont, par exemple, embarqués dans des aéronefs ou des drones. Dans un tel contexte, des utilisateurs malveillants peuvent prendre le contrôle de terminaux afin de générer des flux de communication illégitimes qui viennent perturber le fonctionnement global du réseau. Par flux de communication illégitime, on entend ici un flux de communication généré par un utilisateur malveillant dans le seul but de dégrader le service rendu aux autres utilisateurs, par exemple en saturant la bande passante du réseau. Un utilisateur disposant d'un accès à plusieurs terminaux peut, par exemple, générer une grande quantité de flux de communication qui vont consommer une grande partie du débit disponible et saturer les passerelles d'accès au réseau. Ce faisant, les utilisateurs légitimes du réseau sont pénalisés. En particulier, des attaques par déni de service distribué ou « DDoS » pour Distributed Denial of Service en anglais peuvent provoquer un phénomène d'entonnoir au niveau de certains points de concentration situés à l'interface entre les liaisons satellites et le réseau d'accès. Les équipements concernés sont saturés et des pertes de données pour les utilisateurs légitimes sont alors possibles.

Les solutions existantes utilisent un équipement distant de nettoyage des flux de communication, encore appelé « scrubbing center » en anglais. Lorsqu'un phénomène anormal est détecté, tous les flux de communication reçus au niveau d'un point de concentration du trafic sont transmis à cet équipement qui est en charge de l'analyser et de filtrer les flux illégitimes. La détection d'une attaque par déni de service est le plus souvent basée sur une observation des conséquences visibles de l'attaque, par exemple lorsque le système est perturbé ou injoignable, des paquets de données sont perdus ou le débit du trafic est anormalement élevé.

Ces solutions présentent plusieurs inconvénients. Tout d'abord, elles ne permettent pas d'anticiper une attaque puisque l'intervention de l'équipement de nettoyage n'arrive qu'après avoir détecté un dysfonctionnement du système. Le système est donc inopérant pendant la durée de la détection de l'attaque, de la transmission des flux à l'équipement de nettoyage et du filtrage des flux illégitimes.

Un autre inconvénient d'un tel système est que l'équipement de nettoyage est le plus souvent géré légalement par une entité tierce et est distant du point d'accès au réseau terrestre. En effet, cet équipement est géré par un prestataire de service qui fournit ce service à plusieurs opérateurs distincts. Le positionnement de l'équipement de nettoyage n'est donc pas maitrisable. La transmission des flux corrompus à cet équipement engendre des problèmes de délai qui allongent encore la durée pendant laquelle le système est hors service ou dégradé.

Par ailleurs, lorsqu'un grand nombre de flux illégitimes est généré, une congestion du trafic peut toujours avoir lieu sur le lien de communication vers l'équipement de nettoyage. De plus, ce lien de communication nécessite une infrastructure qui présente un coût de fabrication et qui n'est utilisée que pour transmettre des flux illégitimes qui ne sont pas utiles pour les utilisateurs du système.

On connait par ailleurs les solutions décrites dans les demandes de brevet US 2008/133518 et US 2008/146219.

Au vu de tous ces inconvénients, il existe un besoin pour une solution plus performante permettant de détecter et filtrer les flux de communication illégitimes en minimisant la durée pendant laquelle le système est inopérant et sans nécessiter d'infrastructure de communication supplémentaire.

L'invention propose une méthode de détection et filtrage de flux de communication illégitime qui est implémentée directement dans une station satellitaire passerelle et qui permet de détecter automatiquement si un flux arrivant au niveau de la passerelle est légitime ou non.

Ainsi, l'invention permet d'agir au plus tôt dans la chaine de transmission pour détecter et filtrer les flux illégitimes avant qu'ils ne saturent un équipement situé à un point de concentration du système. De cette façon, il n'est pas nécessaire d'attendre que le système soit rendu inopérant pour détecter une attaque par déni de service. Ainsi, l'invention permet d'assurer une continuité de service même lors d'une telle attaque. Par ailleurs, elle ne nécessite pas d'équipement de nettoyage supplémentaire ni d'infrastructure de communication dédiée. Egalement, l'implémentation de l'invention dans chaque station passerelle permet d'intervenir à un niveau du système où le volume des flux est moins important et la saturation de la bande passante n'est pas encore atteinte.

L'invention a pour objet un procédé, une station satellitaire et un réseau de communication comme défini dans les revendications 1, 10 et 11, respectivement. Des modes de réalisation plus spécifiques sont définies dans les revendications dépendantes.

Selon un aspect particulier, le procédé selon l'invention comprend pour chaque nouveau paquet de données reçu, l'association du paquet à une signature de flux.

Selon un aspect particulier de l'invention, l'ensemble de signatures légitimes et l'ensemble de signatures illégitimes sont prédéterminés à partir d'observations a priori.

Selon un aspect particulier de l'invention, une signature illégitime correspond à un flux de communication qui présente un premier profil de variation donné d'au moins une de ses caractéristiques pendant une première période donnée puis un second profil de variation différent du premier profil de variation, de l'au moins une caractéristique pendant une seconde période donnée.

Selon un aspect particulier de l'invention, les caractéristiques déterminées sont des caractéristiques primaires extraites du flux de communication parmi l'adresse source du flux de communication, l'adresse destination du flux de communication, la version de protocole du flux de communication, le numéro de port du flux de communication.

Selon un aspect particulier de l'invention, les caractéristiques primaires sont extraites d'au moins un champ d'entête des paquets de données reçus.

Selon un aspect particulier de l'invention, les caractéristiques déterminées sont des caractéristiques secondaires mesurées sur les paquets de données d'un flux de communication, parmi le nombre de paquets de données transmis par le flux de communication, la durée du flux de communication, la taille maximale d'un paquet du flux de communication, la taille minimale d'un paquet du flux de communication, la durée moyenne entre deux paquets successifs transmis par le flux de communication.

Selon un aspect particulier, le procédé selon l'invention comprend l'étape d'appliquer plusieurs algorithmes de classification distincts et de classer la signature dans un ensemble de signatures légitimes si l'un au moins desdits algorithmes de classification classe la signature dans un ensemble de signatures légitimes.

Selon un aspect particulier de l'invention, l'algorithme de classification est choisi parmi un algorithme des k-voisins, un algorithme de classification naïve Bayésienne, un algorithme des moindres carrés.

L'invention a aussi pour objet une station satellitaire pour établir une liaison de communication entre un satellite et un réseau d'accès, comprenant un équipement de détection et filtrage de flux de communication illégitimes configuré pour exécuter les étapes du procédé de détection et filtrage de flux de communication illégitimes selon l'un quelconque des modes de réalisation de l'invention.

D'autres caractéristiques et avantages de la présente invention apparaîtront mieux à la lecture de la description qui suit en relation aux dessins annexés qui représentent :
- La figure 1, un schéma d'un système de communication par satellite selon l'art antérieur,
- La figure 2, un schéma d'un système de communication par satellite selon l'invention,
- La figure 3, un schéma d'une station passerelle selon l'invention,
- La figure 4, un organigramme décrivant les étapes d'un procédé de détection et filtrage de flux illégitimes selon l'invention.

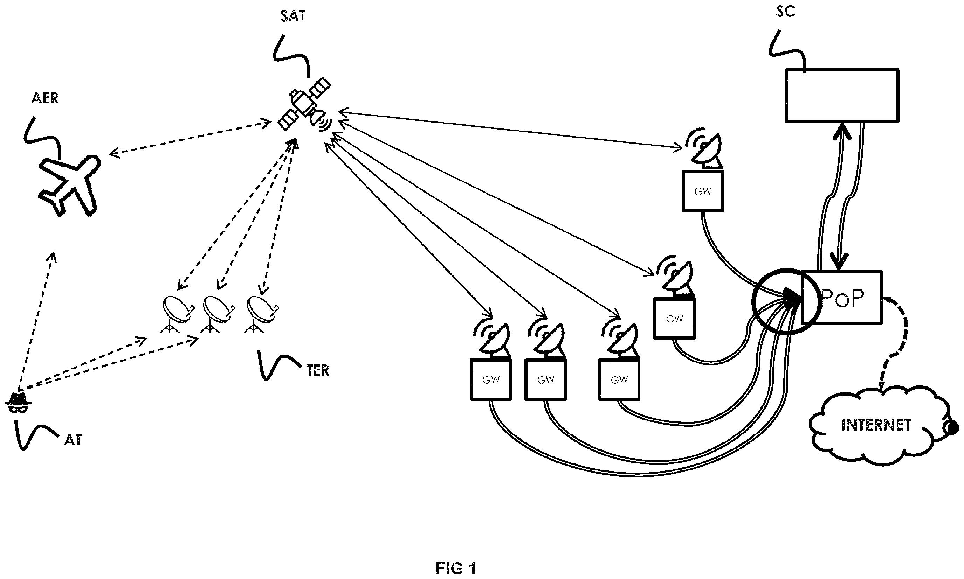

La figure 1 illustre, sur un schéma, un système de communication par satellite selon l'art antérieur dans lequel plusieurs terminaux TER,AER, qui peuvent être au sol ou embarqués dans un aéronef ou dans un drone, accèdent à un réseau public, par exemple le réseau Internet, via une liaison satellite SAT. Plusieurs stations passerelles GW assurent l'interface entre la liaison satellite et le réseau Internet. Un équipement PoP est positionné entre les stations passerelles GW et le réseau Internet pour centraliser les flux de communications et interconnecter plusieurs réseaux appartenant à différents opérateurs satellite. Le système comprend un ou plusieurs satellites géostationnaires SAT ou une constellation de satellites en orbite basse.

Un tel système peut faire l'objet d'attaques provenant d'un utilisateur malveillant AT qui génère des flux de communication illégitimes depuis un ou plusieurs terminaux. Ces flux de communication illégitimes sont agrégés par les différentes stations passerelles GW et peuvent entrainer rapidement une saturation de la capacité de l'équipement d'interconnexion PoP. Les flux de communication légitimes peuvent alors être perdus car l'équipement PoP n'est plus en mesure de recevoir et traiter tous les flux.

Ce type d'attaque est notamment connu sous le nom d'attaque par déni de service. Elle consiste, par exemple, à générer de façon synchrone, un grand nombre de flux de communication qui respectent les protocoles du réseau, mais qui ont un débit ou une fréquence anormalement élevée pour être considérés comme des requêtes légitimes d'utilisateurs du système.

Une solution existante pour répondre à de telles attaques consiste, lorsqu'on détecte la saturation de l'équipement PoP, à transmettre les flux de communication vers un équipement de nettoyage SC qui est en charge de filtrer les flux illégitimes et retransmettre à l'équipement PoP les flux légitimes.

Cette solution présente les inconvénients discutés précédemment.

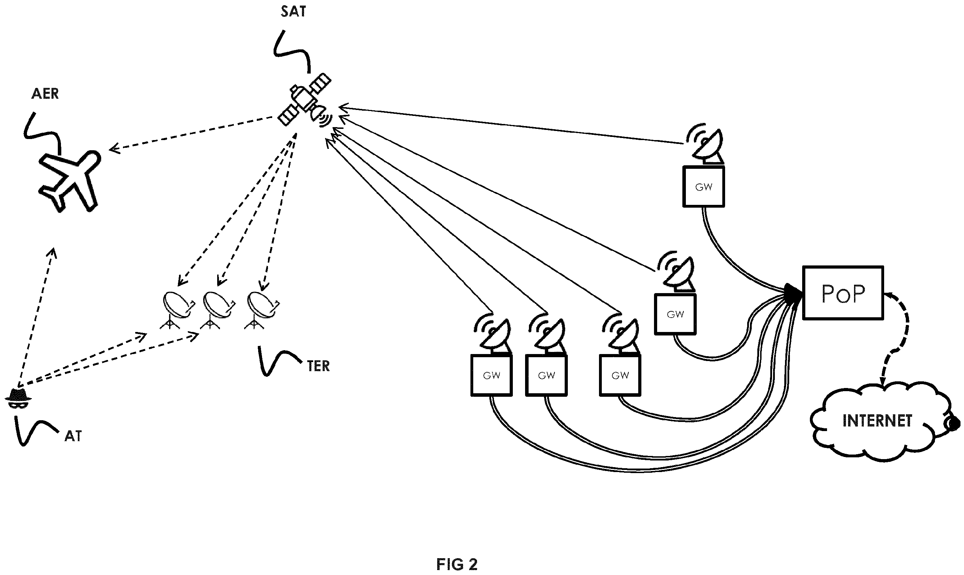

La figure 2 représente, sur un schéma, un système de communications par satellite incluant une fonction de détection et filtrage de flux illégitimes, selon l'invention.

Dans un tel système, l'équipement distant de nettoyage SC est supprimé et une fonction de détection et filtrage de flux illégitimes est directement implémentée dans chaque station passerelle GW.

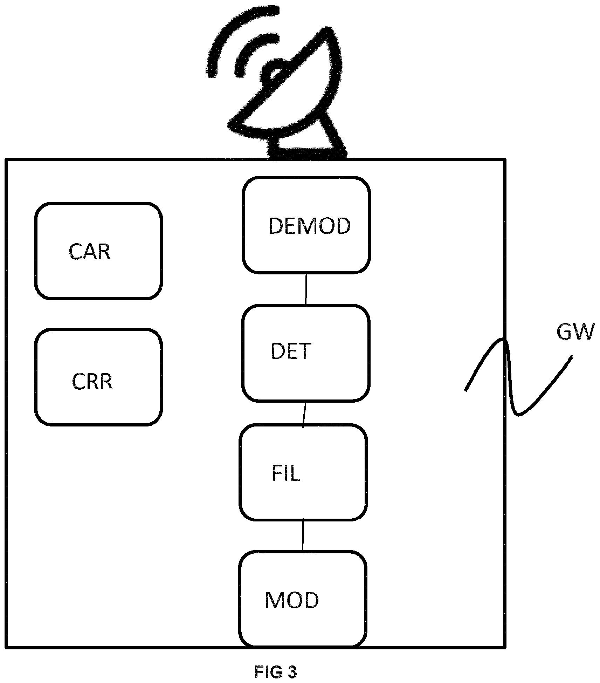

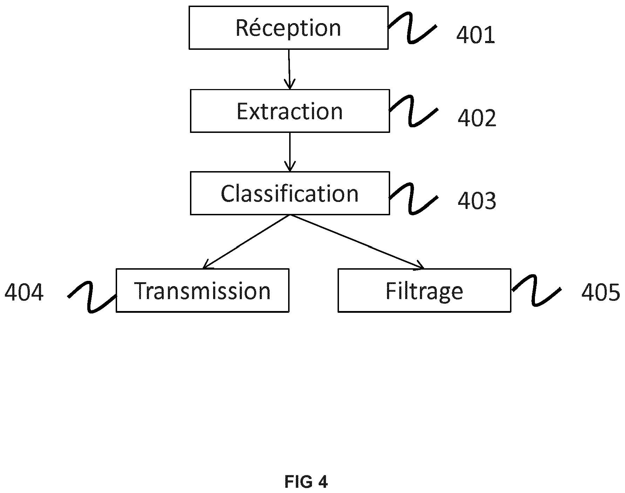

La figure 3 schématise un exemple de réalisation d'une station passerelle GW selon l'invention. La station GW comprend tous les équipements nécessaires pour réaliser la réception et l'émission de signaux sur une liaison sol-satellite mais aussi tous les équipements nécessaires pour transmettre et recevoir des données depuis le réseau Internet et interfacer ce réseau. Par exemple, la station GW peut comprendre un contrôleur d'allocation de ressources CAR pour la liaison sol-satellite et un contrôleur de réseau radio CRR pour gérer l'interface avec le réseau d'accès Internet. La station GW comprend par ailleurs un démodulateur DEMOD pour démoduler les signaux reçus sur la liaison satellite, un détecteur DET de trafic illégitime parmi les signaux démodulés, un filtre FIL pour filtrer le trafic illégitime détecté et un modulateur MOD pour moduler les signaux légitimes en vue de les transmettre vers le réseau d'accès. Le détecteur DET et le filtre FIL mettent en oeuvre le procédé décrit à la figure 4.

Par ailleurs, différentes stations GW peuvent communiquer entre elles pour échanger des informations en vue d'améliorer le fonctionnement du module de détection de flux illégitimes.

La figure 4 représente les étapes principales d'un procédé de détection et filtrage de flux de communication illégitimes mis oeuvre dans une station passerelle GW, selon l'invention.

Le procédé débute par une étape 401 de réception de flux de communication provenant de la liaison entre un satellite SAT et une station passerelle GW. Un flux de communication est composé d'un ensemble de paquets de données qui partagent une ou plusieurs caractéristique(s) identiques dites caractéristiques primaires. Ces caractéristiques primaires comprennent notamment, le type de protocole réseau utilisé ou la version du protocole (IPv4 ou IPv6 par exemple), les adresses source et destination des paquets, le numéro de port du protocole de transport ou plus généralement les valeurs de certains champs d'entête réseau des paquets. De façon générale, la valeur des caractéristiques primaires peut être lue dans un paquet de données ou directement dérivée à partir d'informations contenues dans ce paquet. Les caractéristiques primaires permettent d'identifier à quel flux appartient un paquet reçu.

D'autres caractéristiques dites secondaires sont également définies et associées à un flux de communication reçu. Ces caractéristiques secondaires sont déterminées à partir de mesures réalisées sur le flux de communication. Il s'agit de paramètres mesurés sur un flux de communication déjà identifié. Ces caractéristiques secondaires comprennent notamment la durée totale du flux de communication, la durée moyenne de transmission d'un paquet, la taille moyenne d'un paquet, les tailles maximale et minimale d'un paquet, le débit de transmission du flux ou la durée de l'intervalle entre deux paquets qui est inversement proportionnel au débit de transmission du flux à un facteur près dépendant de la taille des paquets du flux et plus généralement la variation de ce débit ou le profil de variation en fréquence de ce débit.

La liste des caractéristiques primaires et secondaires donnée n'est pas exhaustive et peut être complétée par toute caractéristique permettant d'identifier un flux de communication ou toute caractéristique dérivée de mesures sur ce flux de communication.

Pour chaque flux de communication reçu, on extrait ou on mesure 402 un ensemble de caractéristiques primaires et/ou secondaires du flux pour former une signature. Une signature est un ensemble de valeurs qui peuvent être associées à un flux de communication ou à plusieurs flux de communications. Une signature comprend un ensemble de caractéristiques primaires et/ou secondaires et est définie par les valeurs de ces caractéristiques pour un flux donné ou bien par une plage de valeurs de ces caractéristiques qui permettent de définir plusieurs flux. Ainsi, à chaque flux de communication est associée une signature et plusieurs flux différents peuvent être associés à la même signature.

Un exemple de signature est donné par l'ensemble des caractéristiques suivantes {version ou type de protocole IP, nombre total de paquets du flux, durée totale du flux, adresse source, adresse destination, taille maximale d'un paquet, taille minimale d'un paquet, temps moyen entre la réception de deux paquets consécutifs}.

Plus précisément, à chaque nouveau paquet de données reçu, on détermine ses caractéristiques primaires. Si celles-ci correspondent à une signature d'un flux déjà identifié, le nouveau paquet appartient à ce flux et on lui associe cette signature. S'il s'agit d'une nouvelle signature, elle correspond à un nouveau flux.

Ensuite, on mesure ou on met à jour les caractéristiques secondaires de la signature à partir de mesures sur le paquet reçu. Par exemple, on mesure la taille du paquet et le temps entre la réception du paquet et du paquet précédent. Il convient de noter que certaines caractéristiques secondaires comme par exemple la taille moyenne d'un paquet ou le temps moyen entre la réception de deux paquets nécessite de recevoir un certain nombre de paquets du même flux avant de pouvoir calculer la valeur de la caractéristique.

Le procédé se poursuit ensuite avec une étape de classification 403 exécutée pour chaque flux identifié et associé à une signature. La classification 403 d'un flux consiste à classer le flux soit dans un ensemble de flux légitimes soit dans un ensemble de flux illégitimes. Si le flux est classé comme étant un flux légitime, les paquets de données du flux sont transmis 404 vers le réseau d'accès. Dans le cas contraire, ils sont filtrés 405 c'est-à-dire qu'ils sont supprimés et ne sont pas transmis au réseau d'accès.

La procédure de classification 403 est à présent décrite. On dispose initialement de deux ensembles de signatures S_l et S_i caractérisant respectivement les flux légitimes (S_l) et illégitimes (S_i).

Ces deux ensembles sont déterminés a priori et constituent des paramètres d'entrées du procédé selon l'invention. Ils peuvent être déterminés par exemple en analysant des flux de communication générés et maîtrisés puis transmis dans le réseau, ces flux de communication constituant des flux légitimes et permettant de définir le premier ensemble de signatures S_I. De la même façon, des flux illégitimes simulant une attaque par déni de service peuvent être générés pour permettre de définir le second ensemble S i.

Un flux illégitime est par exemple, un flux dont une caractéristique secondaire diffère fortement de la moyenne observée pour des flux légitimes. Par exemple, il peut s'agir d'un flux qui comporte des paquets ayant une taille moyenne très élevée ou un temps moyen inter-paquets très faible, ou encore un flux qui présente un profil de variation de débit particulier, par exemple une fréquence de transmission de paquets très élevée pendant une durée fixe ou selon une transmission périodique.

Un autre exemple de flux illégitime est un flux dont certaines caractéristiques primaires et/ou secondaires sont constantes pendant une première période donnée puis fortement variables pendant une seconde période.

En particulier, un flux dont la durée entre paquets consécutifs est réduite significativement après avoir été constante pendant une durée donnée est susceptible d'être illégitime. De même, un flux dont la taille moyenne des paquets augmente significativement après avoir été constante pendant une durée donnée est susceptible d'être illégitime.

Inversement, un autre exemple de flux illégitime est un flux dont certaines caractéristiques sont fortement variables pendant une première durée donnée, par exemple variables aléatoirement, puis deviennent constantes pendant une seconde durée. Par exemple, un tel flux peut présenter une durée inter-paquets aléatoire et/ou une taille de paquets fortement variable pendant une première durée, puis subitement, l'une ou l'autre de ces caractéristiques (ou les deux en même temps) devient constante.

De manière générale, un flux illégitime peut être caractérisé comme étant un flux qui présente un premier profil de variation donné de certaines caractéristiques pendant une première période donnée puis un second profil de variation différent du premier profil de variation, pour les mêmes caractéristiques pendant une seconde période donnée.

Les deux ensembles de signatures S_I et S_i sont ensuite utilisés pour paramétrer au moins un algorithme de classification parmi les trois algorithmes suivants.

Un premier algorithme de classification possible est l'algorithme des k-voisins notamment décrit dans la référence [1]. Il utilise les deux ensembles S_l et S_i comme données d'entrainement. La méthode des k-voisins consiste à classer un flux quelconque reçu et identifié sur la base de sa similarité avec les exemples des deux ensembles S_l et S_i d'apprentissage, selon une métrique qui est, par exemple la distance euclidienne ou toute autre distance appropriée.

Un deuxième algorithme de classification possible est l'algorithme de classification naïve Bayésienne qui utilise les deux ensembles S_l et S_i pour exécuter une phase d'apprentissage. Ce deuxième algorithme est décrit dans la référence [2].II consiste à calculer pour un flux quelconque reçu et identifié par sa signature, un maximum de vraisemblance, c'est-à-dire une probabilité d'appartenance de ce flux à l'un des deux ensembles S_I et S_i.

Un troisième algorithme de classification possible est un algorithme de classification linéaire utilisant une méthode des moindres carrés. Ce troisième algorithme est décrit dans la référence [3] et consiste à déterminer un hyperplan médian caractérisant une segmentation de l'espace des signatures en deux ensembles disjoints. La détermination d'un optimum global sur un hyperplan n'étant pas triviale l'hyperplan ainsi déterminé peut être transformé en un convexe, sur lequel la détermination de l'optimum est garantie par un procédé impliquant une fonction injective. Les performances de la procédure de classification se voient donc améliorées de par l'application de la transformation susmentionnée.

De façon générale, d'autres algorithmes de classification sont envisageables par l'Homme du métier. Le concept général commun de ces algorithmes consiste, pour chaque signature associée à un nouveau flux identifié, à rechercher auquel des deux ensembles S_I ou S_i, cette signature appartient, en se basant sur des critères de similarité, de probabilité d'appartenance ou de proximité.

Dans un mode de réalisation particulier de l'invention, tous les algorithmes de classification disponibles (par exemple les trois algorithmes décrits ci-dessus) sont exécutés en parallèle ou l'un après l'autre, pour chaque flux identifié. Si au moins l'un des algorithmes de classification classe la signature du flux identifié dans l'ensemble des signatures légitimes S_I, alors le flux identifié est considéré comme étant un flux légitime et est transmis 404 au réseau d'accès. Il y a en effet davantage de risque à classifier comme illégitime un flux légitime (risque de faux positif), que de classifier comme légitime un flux illégitime (risque de faux négatif). Il est préférable de transmettre un flux illégitime au réseau plutôt que de bloquer à tort un flux légitime. Ainsi, on privilégie un taux de faux positif faible au détriment du taux de faux négatif. Un flux est classifié comme étant illégitime si et seulement si l'ensemble des algorithmes le classifie comme tel. Dans ce cas, le flux est filtré 405, c'est-à-dire que la station passerelle GW ne poursuit pas les traitements sur ce flux et bloque tous les nouveaux paquets de données reçus qui sont identifiés comme appartenant à ce flux.

Dans un autre mode de réalisation, en complément de cette phase de classification 403 qui est effectuée localement au sein de chacune des stations passerelles GW, les données collectées par les différents algorithmes de classification sont utilisées pour une mise à jour de chacun des algorithmes de classification sur chaque station passerelle GW. Cette mise à jour est effectuée en utilisant des techniques d'apprentissage par renforcement. Dans ce mode de réalisation, un équipement distant reçoit les données collectées par les algorithmes de classification et produit, à intervalle régulier, des informations concernant la fiabilité des décisions de classification opérées par le passé. La génération de ces informations peut être effectuée de façon automatique à partir de flux générés spécifiquement dans le but de valider le fonctionnement global du procédé de classification. Elle peut aussi être effectuée par un opérateur en analysant les décisions passées des algorithmes de classification.

Le procédé selon l'invention utilise ces données afin de mettre à jour les ensembles de signatures S_i et S_I et, éventuellement, d'exécuter une modération des acquis de l'apprentissage obtenu au cours des phases précédentes d'apprentissage pour chacun des algorithmes de classification. L'outil de classification 403 est ainsi mis à jour dynamiquement en fonction des succès ou des échecs, c'est à dire s'il a correctement ou non classifié les flux. Cette agrégation des données est globale à toutes les stations passerelles et les paramètres sont donc mis à jour sur toutes les passerelles.

### Références

[1] O Duda, Richard & E Hart, Peter & G. Stork, David. « Pattern classification ». Wiley interscience, (2001).
[2] Manning, C., Raghavan, P., & Schütze, H. (2008). "Text classification and Naive Bayes. In Introduction to Information Retrieval (pp. 234-265). Cambridge: Cambridge University Press".
[3] R. Rifkin, G. Yeo, T. Poggio, "Regularized least-squares classification", Nato Sci. Ser. Sub Ser. III.

## Revendications

1. Procédé de détection et filtrage de flux de communication illégitimes dans un réseau de communication par satellite comprenant une pluralité de terminaux (TER,AER) aptes à communiquer avec un réseau d'accès via une liaison satellite, le réseau comprenant plusieurs stations satellitaires passerelles (GW) assurant l'interface entre la liaison satellite et le réseau d'accès et un équipement d'interconnexion (PoP) positionné entre les stations passerelles (GW) et le réseau d'accès pour centraliser les flux de communications et interconnecter plusieurs réseaux appartenant à différents opérateurs satellites, le procédé étant exécuté par lesdites stations satellitaires passerelles et comprenant les étapes de :
- Recevoir (401) un flux de communication provenant du satellite,
- Déterminer (402) un ensemble de caractéristiques du flux de communication formant une signature du flux,
- Appliquer (403) au moins un algorithme de classification pour classer la signature dans un ensemble de signatures légitimes ou dans un ensemble de signatures illégitimes,
- Si la signature est classée dans l'ensemble de signatures illégitimes, filtrer (405) le flux de communication, sinon transmettre (404) le flux de communication au réseau d'accès via l'équipement d'interconnexion (PoP).

2. Procédé de détection et filtrage de flux de communication illégitimes selon la revendication 1 comprenant, pour chaque nouveau paquet de données reçu, l'association du paquet à une signature de flux.

3. Procédé de détection et filtrage de flux de communication illégitimes selon l'une des revendications précédentes dans lequel l'ensemble de signatures légitimes et l'ensemble de signatures illégitimes sont prédéterminés à partir d'observations a priori.

4. Procédé de détection et filtrage de flux de communication illégitimes selon l'une des revendications précédentes dans lequel une signature illégitime correspond à un flux de communication qui présente un premier profil de variation donné d'au moins une de ses caractéristiques pendant une première période donnée puis un second profil de variation différent du premier profil de variation, de l'au moins une caractéristique pendant une seconde période donnée.

5. Procédé de détection et filtrage de flux de communication illégitimes selon l'une des revendications précédentes dans lequel les caractéristiques déterminées sont des caractéristiques primaires extraites du flux de communication parmi l'adresse source du flux de communication, l'adresse destination du flux de communication, la version de protocole du flux de communication, le numéro de port du flux de communication.

6. Procédé de détection et filtrage de flux de communication illégitimes selon la revendication 5 dans lequel les caractéristiques primaires sont extraites d'au moins un champ d'entête des paquets de données reçus.

7. Procédé de détection et filtrage de flux de communication illégitimes selon l'une des revendications précédentes dans lequel les caractéristiques déterminées sont des caractéristiques secondaires mesurées sur les paquets de données d'un flux de communication, parmi le nombre de paquets de données transmis par le flux de communication, la durée du flux de communication, la taille maximale d'un paquet du flux de communication, la taille minimale d'un paquet du flux de communication, la durée moyenne entre deux paquets successifs transmis par le flux de communication.

8. Procédé de détection et filtrage de flux de communication illégitimes selon l'une des revendications précédentes comprenant l'étape d'appliquer plusieurs algorithmes de classification distincts et de classer la signature dans un ensemble de signatures légitimes si l'un au moins desdits algorithmes de classification classe la signature dans un ensemble de signatures légitimes.

9. Procédé de détection et filtrage de flux de communication illégitimes selon l'une des revendications précédentes dans lequel l'algorithme de classification est choisi parmi un algorithme des k-voisins, un algorithme de classification naïve Bayésienne, un algorithme des moindres carrés.

10. Station satellitaire (GW) pour établir une liaison de communication entre un satellite et un réseau d'accès, comprenant un équipement de détection (DET) et filtrage (FIL) de flux de communication illégitimes configuré pour exécuter les étapes du procédé de détection et filtrage de flux de communication illégitimes selon l'une quelconque des revendications précédentes.

11. Réseau de communication par satellite comprenant une pluralité de terminaux (TER,AER) aptes à communiquer avec un réseau d'accès via une liaison satellite, le réseau comprenant plusieurs stations satellitaires passerelles (GW) selon la revendication 10 assurant l'interface entre la liaison satellite et le réseau d'accès et un équipement d'interconnexion (PoP) positionné entre les stations passerelles (GW) et le réseau d'accès pour centraliser les flux de communications et interconnecter plusieurs réseaux appartenant à différents opérateurs satellites.

## Patentansprüche

1. Verfahren zur Erkennung und Filterung illegitimer Kommunikationsflüsse in einem Satellitenkommunikationsnetz, das eine Vielzahl von Endgeräten (TER, AER) umfasst, die in der Lage sind, über eine Satellitenverbindung mit einem Zugangsnetz zu kommunizieren, wobei das Netz mehrere Gateway-Satellitenstationen (GW), welche die Schnittstelle zwischen der Satellitenverbindung und dem Zugangsnetz sicherstellen, und eine Verbindungsausrüstung (PoP) umfasst, die zwischen den Gateway-Stationen (GW) und dem Zugangsnetz positioniert ist, um die Kommunikationsflüsse zu zentralisieren und mehrere Netze, die zu verschiedenen Satellitenbetreibern gehören, miteinander zu verbinden, wobei das Verfahren von den Gateway-Satellitenstationen ausgeführt wird und folgende Schritte umfasst:
- Empfangen (401) eines Kommunikationsflusses von dem Satelliten,
- Bestimmen (402) eines Satzes von Merkmalen des Kommunikationsflusses, der eine Signatur des Flusses bildet,
- Anwenden (403) mindestens eines Klassifizierungsalgorithmus, um die Signatur in einen Satz legitimer Signaturen oder in einen Satz illegitimer Signaturen einzuordnen,
- wenn die Signatur in den Satz illegitimer Signaturen eingeordnet ist, Filtern (405) des Kommunikationsflusses, andernfalls Übertragen (404) des Kommunikationsflusses über die Verbindungsausrüstung (PoP) an das Zugangsnetz.

2. Verfahren zur Erkennung und Filterung von illegitimen Kommunikationsflüssen nach Anspruch 1, umfassend für jedes neu empfangene Datenpaket die Zuordnung des Pakets zu einer Fluss-Signatur.

3. Verfahren zur Erkennung und Filterung illegitimer Kommunikationsflüsse nach einem der vorhergehenden Ansprüche, wobei der Satz legitimer Signaturen und der Satz illegitimer Signaturen anhand von a-priori-Beobachtungen vorbestimmt sind.

4. Verfahren zur Erkennung und Filterung illegitimer Kommunikationsflüsse nach einem der vorhergehenden Ansprüche, wobei eine illegitime Signatur einem Kommunikationsfluss entspricht, der ein erstes gegebenes Variationsprofil von mindestens einem seiner Merkmale während einer ersten gegebenen Periode und dann ein zweites Variationsprofil aufweist, das sich vom ersten Variationsprofil des mindestens einen Merkmals während einer zweiten gegebenen Periode unterscheidet.

5. Verfahren zur Erkennung und Filterung von illegitimen Kommunikationsflüssen nach einem der vorhergehenden Ansprüche, wobei die bestimmten Merkmale primäre Merkmale sind, die aus dem Kommunikationsfluss aus der Quelladresse des Kommunikationsflusses, der Zieladresse des Kommunikationsflusses, der Protokollversion des Kommunikationsflusses, der Portnummer des Kommunikationsflusses extrahiert sind.

6. Verfahren zur Erkennung und Filterung von illegitimen Kommunikationsflüssen nach Anspruch 5, wobei die primären Merkmale aus mindestens einem Kopffeld der empfangenen Datenpakete extrahiert sind.

7. Verfahren zur Erkennung und Filterung illegitimer Kommunikationsflüsse nach einem der vorhergehenden Ansprüche, wobei die bestimmten Merkmale sekundäre Merkmale sind, die an den Datenpaketen eines Kommunikationsflusses aus der Anzahl von vom Kommunikationsfluss übertragenen Datenpaketen, der Dauer des Kommunikationsflusses, der maximalen Größe eines Pakets des Kommunikationsflusses, der minimalen Größe eines Pakets des Kommunikationsflusses, der durchschnittlichen Dauer zwischen zwei aufeinanderfolgenden, vom Kommunikationsfluss übertragenen Paketen gemessen werden.

8. Verfahren zur Erkennung und Filterung von illegitimen Kommunikationsflüssen nach einem der vorhergehenden Ansprüche, umfassend den Schritt des Anwendens mehrerer unterschiedlicher Klassifikationsalgorithmen und des Einordnens der Signatur in einen Satz von legitimen Signaturen, wenn mindestens einer der Klassifikationsalgorithmen die Signatur in einen Satz von legitimen Signaturen einordnet.

9. Verfahren zur Erkennung und Filterung illegitimer Kommunikationsflüsse nach einem der vorhergehenden Ansprüche, wobei der Klassifikationsalgorithmus aus einem k-Nachbarn-Algorithmus, einem Naiven Bayes-Klassifikationsalgorithmus, einem Algorithmus der kleinsten Quadrate ausgewählt ist.

10. Satellitenstation (GW) zum Aufbauen einer Kommunikationsverbindung zwischen einem Satelliten und einem Zugangsnetz, umfassend eine Einrichtung zur Erkennung (DET) und Filterung (FIL) illegitimer Kommunikationsflüsse, die so konfiguriert ist, dass sie die Schritte des Verfahrens zur Erkennung und Filterung illegitimer Kommunikationsflüsse nach einem der vorhergehenden Ansprüche ausführt.

11. Satellitenkommunikationsnetz, umfassend eine Vielzahl von Endgeräten (TER, AER), die in der Lage sind, über eine Satellitenverbindung mit einem Zugangsnetz zu kommunizieren, wobei das Netz mehrere Gateway-Satellitenstationen (GW) nach Anspruch 10 umfasst, welche die Schnittstelle zwischen der Satellitenverbindung und dem Zugangsnetz sicherstellen, und eine Verbindungsausrüstung (PoP), die zwischen den Gateway-Stationen (GW) und dem Zugangsnetz positioniert ist, um die Kommunikationsflüsse zu zentralisieren und mehrere Netze, die verschiedenen Satellitenbetreibern gehören, miteinander zu verbinden.

## Claims

1. A method of detecting and filtering illegitimate communication streams in a satellite communication network, comprising a plurality of terminals (TER, AER) able to communicate with an access network through a satellite link, the network comprising several gateway satellite stations (GW) ensuring the interface between the satellite link and the access network and an interconnection equipment (PoP) positioned between the gateway stations (GW) and the access network to centralise the communication streams and to interconnect several networks belonging to different satellite operators, the method being executed by said gateway satellite stations and comprising the steps of:
- receiving (401) a communication stream originating from the satellite,
- determining (402) a set of characteristics of the communication stream forming a signature of the stream,
- applying (403) at least one classification algorithm so as to class the signature into a set of legitimate signatures or into a set of illegitimate signatures,
- if the signature is classed into the set of illegitimate signatures, filtering (405) the communication stream, otherwise transmitting (404) the communication stream to the access network through the interconnection equipment (PoP).

2. The method of detecting and filtering illegitimate communication streams according to claim 1 comprising, for each new received data packet, the association of the packet with a stream signature.

3. The method of detecting and filtering illegitimate communication streams according to one of the preceding claims, wherein the set of legitimate signatures and the set of illegitimate signatures are predetermined on the basis of a priori observations.

4. The method of detecting and filtering illegitimate communication streams according to one of the preceding claims, wherein an illegitimate signature corresponds to a communication stream which exhibits a first given profile of variation of at least one of its characteristics during a first given period and then a second profile of variation different from the first profile of variation, of the at least one characteristic during a second given period.

5. The method of detecting and filtering illegitimate communication streams according to one of the preceding claims, wherein the determined characteristics are primary characteristics extracted from the communication stream from among the source address of the communication stream, the destination address of the communication stream, the protocol version of the communication stream, the port number of the communication stream.

6. The method of detecting and filtering illegitimate communication streams according to claim 5, wherein the primary characteristics are extracted from at least one header field of the received data packets.

7. The method of detecting and filtering illegitimate communication streams according to one of the preceding claims, wherein the determined characteristics are secondary characteristics measured on the data packets of a communication stream, from among the number of data packets transmitted by the communication stream, the duration of the communication stream, the maximum size of a packet of the communication stream, the minimum size of a packet of the communication stream, the average duration between two successive packets transmitted by the communication stream.

8. The method of detecting and filtering illegitimate communication streams according to one of the preceding claims, comprising the step of applying several distinct classification algorithms and of classing the signature into a set of legitimate signatures if at least one of said classification algorithms classes the signature into a set of legitimate signatures.

9. The method of detecting and filtering illegitimate communication streams according to one of the preceding claims, wherein the classification algorithm is chosen from among a k-neighbours algorithm, a naive Bayes classification algorithm, a least squares algorithm.

10. A satellite station (GW) for establishing a communication link between a satellite and an access network, comprising a device for detecting (DET) and filtering (FIL) illegitimate communication streams which is configured to execute the steps of the method for detecting and filtering illegitimate communication streams according to any one of the preceding claims.

11. Satellite communication network, comprising a plurality of terminals (TER, AER) able to communicate with an access network through a satellite link, the network comprising several gateway satellite stations (GW) according to claim 10, ensuring the interface between the satellite link and the access network and an interconnection equipment (PoP) positioned between the gateway stations (GW) and the access network to centralise the communication streams and to interconnect several networks belonging to different satellite operators.
